# EUROPÄISCHE PATENTANMELDUNG

(11) **EP 3 766 738 A1**
(43) Veröffentlichungstag der Anmeldung: **20.01.2021**
(21) Anmeldenummer: 20168627.6
(22) Anmeldetag: 08.04.2020
(51) Int. Cl.: B60R 9/048, E01C 19/48

(54) **GEPÄCKNETZE IM FAHRZEUGDACH BEI STRASSENBAUMASCHINEN**

(30) Priorität: 19.07.2019 DE 202019103991 U
(71) Anmelder: Joseph Vögele AG, 67067 Ludwigshafen (DE)
(72) Erfinder: GLÖCKNER, Tom, 67659 Kaiserslautern (DE); THEOBALD, Maximilian, 67061 Ludwigshafen (DE)
(74) Vertreter: Grünecker Patent- und Rechtsanwälte PartG mbB

(57) **Zusammenfassung**

Straßenbaumaschine (1) in Form eines Straßenfertigers (2) oder eines Beschickerfahrzeugs (3) mit einem Chassis (4) und einem Führerstand (5) mit einem Fahrzeugdach (6), wobei ein oder mehrere Gepäcknetze (8) an dem Fahrzeugdach (6) der Straßenbaumaschine (1) angebracht sind.

## Beschreibung

Die vorliegende Erfindung betrifft eine Straßenbaumaschine, bei der es sich um einen Straßenfertiger oder ein Beschickerfahrzeug für einen Straßenfertiger handelt, mit einem Führerstand gemäß dem Oberbegriff des Anspruchs 1.

Straßenbaumaschinen verfügen üblicherweise über einen Führerstand, der mit Bedienelementen, einem Sitz für den Bediener der Maschine sowie Fahrerdächern als Schutz vor der jeweils herrschenden Witterung, ausgestattet ist. Daneben besteht der Bedarf, die persönlichen und/oder tätigkeitsbezogenen Gegenstände der Bediener zu verstauen, ohne den Arbeitsplatz oder andere Funktionalitäten der Maschine einzuschränken, beziehungsweise ohne eine Sichtfeldeinschränkung zu verursachen. Bisher sind jedoch keine befriedigenden Lösungen zur Stauraumschaffung für die persönlichen und tätigkeitsbezogenen Gegenstände der Bediener für Führerstände der Straßenbaumaschinen bekannt.

Die Aufgabe der vorliegenden Erfindung ist es, eine benutzerfreundliche Straßenbaumaschine zur Verfügung zu stellen.

Diese Aufgabe wird gelöst durch einen Straßenfertiger oder Beschicker mit der Möglichkeit zum Anbringen von Gepäcknetzen im Fahrzeugdach gemäß den Merkmalen des Anspruchs 1. Bevorzugte Ausführungsformen der Erfindung sind in den Unteransprüchen angegeben.

Die Straßenbaumaschine in Form eines Straßenfertigers oder eines Beschickerfahrzeugs mit einem Chassis sieht auf dem Chassis einen Führerstand mit einem Fahrzeugdach vor. Erfindungsgemäß sind ein oder mehrere Gepäcknetze an dem Fahrzeugdach der Straßenbaumaschine angebracht. Dies bietet eine sichere, schnelle und praktische Lösung für die Bediener der Straßenbaumaschine, ihre persönlichen oder tätigkeitsbezogenen Gegenstände zu verstauen, ohne ihr gewohntes Bewegungsumfeld einzuschränken und die Sicht aus der Kabine des Führerstands zu mindern.

In einer weiteren Ausführungsvariante weist das Fahrzeugdach eine oder mehrere Markisen auf, und ein oder mehrere Gepäcknetze können an einer der Markisen des Fahrzeugdachs angebracht. Durch das Nutzen der Markisenfläche als Anbringungsort für die Gepäcknetze am Fahrzeugdach kann der im Führerstand zur Verfügung stehende Raum optimal ausgenutzt werden.

Bevorzugt ist das Gepäcknetz ein elastisches Bauteil, welches das Verstauen von Gegenständen, die in Größe und Form variieren können, am Fahrzeugdach ermöglicht.

In einer anderen bevorzugten Ausführungsvariante ist das Gepäcknetz ein elastisches Bauteil.

In einer weiteren bevorzugten Ausführungsvariante ist das Gepäcknetz ein unelastisches Bauteil.

Diese Varianten ermöglichen es, schwere Objekte zu verstauen, ohne die Sicht aus der Kabine des Führerstands aufgrund von Schaukeln der Gepäcknetze zu vermindern.

Vorzugsweise weisen die Maschen mindestens eines Gepäcknetzes eine Messung von 0,5 mm bis 50 mm auf. Das feinmaschige Gewebe des Gepäcknetzes ermöglicht es kleinere Objekte zu verstauen.

In einer einfachen und gleichzeitig stabilen Variante ist das Gepäcknetz an dem Fahrzeugdach und/oder an einer der Markisen des Fahrzeugdachs ortsfest angebracht.

In einer weiteren vorteilhaften Ausführungsform ist ein Gepäcknetz an dem Fahrzeugdach und/oder an einer der Markisen des Fahrzeugdachs werkzeuglos lösbar angebracht, wodurch die Gepäcknetze in vereinfachter Weise getauscht oder ggf. entfernt werden können.

In einer vorteilhaften Ausführungsweise ist das Gepäcknetz an dem Fahrzeugdach und/oder an einer der Markisen des Fahrzeugdachs mittels zwei seitlicher Verbindungskonsolen angebracht. Die Verbindungskonsolen ermöglichen ein sicheres Befestigen und Nutzen der Gepäcknetze an dem Fahrzeugdach und/oder an einer der Markisen des Fahrzeugdachs.

Vorzugsweise weisen die Verbindungskonsolen Kunststoff auf, damit das Dach nicht zu schwer wird.

Insbesondere vorteilhaft ist es, wenn ein Gepäcknetz an dem Fahrzeugdach und/oder an einer der Markisen des Fahrzeugdachs mittels einer Führungsschiene, vorzugsweise verschiebbar, angebracht ist. Damit können die Positionen der Gepäcknetze verändert werden.

Bevorzugt weist mindestens ein Gepäcknetz einen an dem Gepäcknetz angeordneten Keder 11 auf. Dieser Keder ist an das Fahrzeugdach oder an den Markisen 7des Fahrzeugdachs 6 eingearbeitete Schienen angebracht.

Im Folgenden werden beispielhafte Ausführungsformen anhand der Figuren erläutert.

Dabei zeigt
- Fig. 1: eine schematische Perspektivansicht einer Straßenbaumaschine in Form eines Straßenfertigers,
- Fig. 2: eine schematische Perspektivansicht einer Straßenbaumaschine in Form eines Beschickerfahrzeugs,
- Fig. 3: eine schematische Perspektivansicht eines Fahrzeugdachs und daran ausziehbar angeordnete Markisen einer Straßenbaumaschine,
- Fig. 4: eine schematische Unteransicht des in Fig. 3 gezeigten Fahrzeugdachs und
- Fig. 5: eine schematische Perspektivansicht einer Kederschiene.

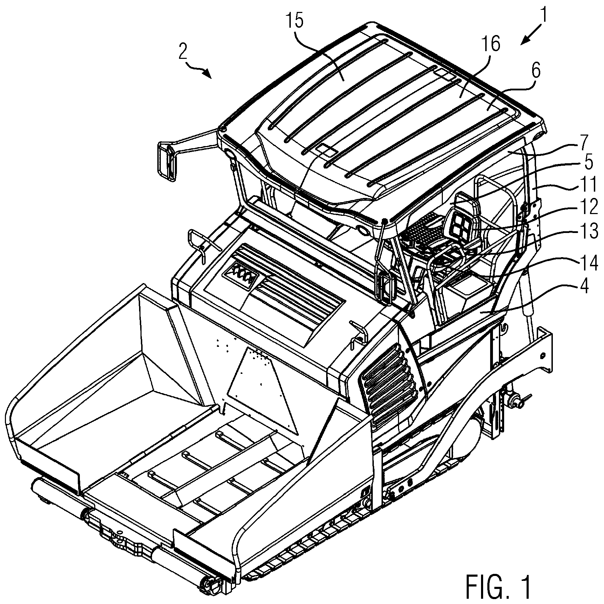

Figur 1 zeigt in perspektivischer Ansicht von schräg vorne eine Straßenbaumaschine 1, bei der es sich um einen Straßenfertiger 2 zur Herstellung eines Straßenbelags handelt. Dieser Straßenfertiger 2 verfügt in üblicher Weise über ein Chassis 4 und einen auf den Chassis 4 angeordneten Führerstand 5, auf welchem sich ein Fahrer während des Betriebs des Straßenfertigers 2 aufhält. Der Führerstand 5 kann offen gestaltet werden, d.h. nicht kabinenartig geschlossen. Es ist auch üblich, den Führerstand 5 mit seitlichen Begrenzungen z.B. in Form von geländerartigen Streben zu umschließen, welche an der Rückseite der Straßenbaumaschine 1 einen Zugang zum Betreten des Führerstandes 5 frei lassen.

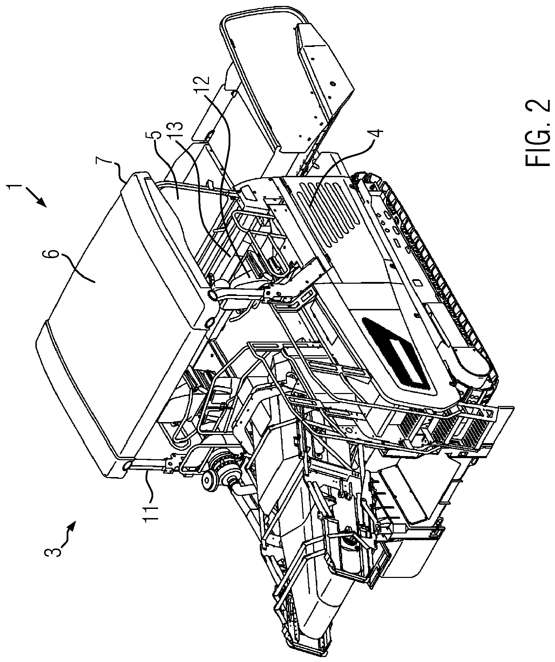

Figur 2 zeigt in perspektivischer Ansicht von schräg hinten eine Straßenbaumaschine 1, bei der es sich um ein Beschickerfahrzeug 3 für einen Straßenfertiger 2 handelt. Das Beschickerfahrzeug 3 versorgt Straßenfertiger 2 mit Einbaugut, ist selbstfahrend und verfügt in üblicher Weise über ein Chassis 4 sowie einen über den Chassis 4 angeordneten Führerstand 5.

Der Führerstand 5 der Straßenbaumaschine 1 wird von einem Fahrzeugdach 6 überspannt, welches von einer Ständerstruktur 11 getragen wird. Die Ständestruktur 11 kann faltbar sein, um das Fahrzeugdach 6 in eine untere Transportposition auf den Führerstand 5 abzusenken. Im Führerstand 5 können weitere Elemente wie ein oder mehrere Sitze 12 oder ein Bedienpult 13 mit Bedienelementen 14 zum Bedienen der Straßenbaumaschine 1 angeordnet sein.

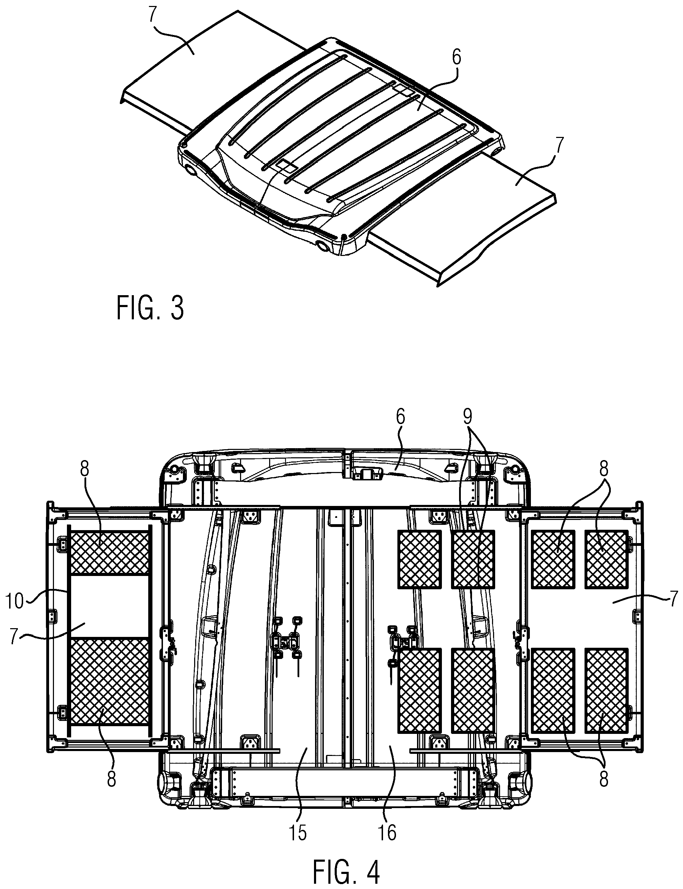

Figur 3 zeigt eine schematische Perspektivansicht eines Fahrzeugdachs 6 von vorne. Das Fahrzeugfach 6 umfasst ein erstes und zweites Dachmodul 15, 16, die im vorliegenden Ausführungsbeispiel spiegelbildlich zueinander ausgebildet sind. Jedes Dachmodul 15, 16 des Fahrzeugdachs 6 kann über eine Markise 7 verfügen, die zusätzlichen Schutz gegen Regen und Sonne bietet. Die Markisen 7 können an dem Dachmodul 15, 16 des Fahrzeugdachs 6 ausziehbar angeordnet sein. In Figur 3 sind die Markisen 7 im ausgezogenen Zustand dargestellt.

Figur 4 zeigt eine schematische Unteransicht eines Fahrzeugdachs 6 mit an dem Fahrzeugdach 6 ausziehbar angeordneter Markisen 7. Ein oder (hier) mehrere Gepäcknetze 8 sind an dem Fahrzeugdach 6 angebracht, zum Beispiel direkt an einem der Dachmodule 15, 16 oder, wie in Figur 4 dargestellt, an einer oder beiden der Markisen 7 des Fahrzeugdachs 6.

Die Gepäcknetze 8 können als elastische, teilelastische oder unelastische Bauteile ausgebildet sein, welche genug Spannkraft aufweisen, um persönliche oder tätigkeitsbezogene Gegenstände, wie z.B. Kleidung, Werkzeug oder Dokumente aufzunehmen und auch bei starken Erschütterungen gegen Herausfallen zu sichern. Die Maschen der Gepäcknetze können von beliebiger Größe sein, vorzugsweise wird jedoch ein sehr feinmaschiges Gewebe verwendet, wobei die Maschen eine Abmessung von 0,5 mm bis 50 mm aufweisen. Im unbenutzten Zustand liegen die Gepäcknetze 8 flach an der Innenseite des Fahrzeugdachs an, wodurch es zu quasi keinen Raumeinbußen kommt. Für den benutzten Zustand wird sichergestellt, dass die Bediener der Straßenbaumaschine 1 in ihrem gewohnten Bewegungsumfeld nicht eingeschränkt werden oder die Sicht aus dem Führerstand 5 gemindert wird.

Für die Anbringung der Gepäcknetze 8 an dem Fahrzeugdach 6 und/oder an einer der Markisen 7 des Fahrzeugdachs 6 können unterschiedliche Methoden vorgesehen werden. Zum Beispiel können die Gepäcknetze 8 an dem Fahrzeugdach 6 und/oder an einer der Markisen 7 des Fahrzeugdachs 6 mittels zwei Verbindungskonsolen 9 befestigt werden. Typischerweise sind Verbindungskonsolen 9 aus Kunststoff hergestellt und erstrecken sich ungefähr entlang der seitlichen Länge der Gepäcknetze 8.

Alternativ können die Gepäcknetze 8 an dem Fahrzeugdach 6 und/oder an einer der Markisen 7 des Fahrzeugdachs 6 mittels einer Führungsschiene 10 angebracht werden, wobei die Gepäcknetze 8 entlang der Führungsschiene 10 in unterschiedlichen Positionen verschoben werden können.

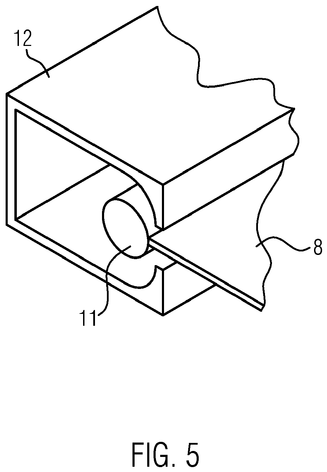

Wie in Figur 5 dargestellt, können die Gepäcknetze an dem Gepäcknetz angeordnete Keder 11 aufweisen, wobei der Keder 11 in eine in das Fahrzeugdach 6 oder in eine der Markise 7 des Fahrzeugdachs 6 eingearbeitete Kederschiene 12 eingesetzt ist.

Es ist auch möglich, die Gepäcknetze 8 an dem Fahrzeugdach 6 und/oder an einer der Markisen 7 des Fahrzeugdachs 6 mittels Haken, Reiß- und/oder Klettverschluss anzubringen.

## Patentansprüche

1. Straßenbaumaschine (1) in Form eines Straßenfertigers (2) oder eines Beschickerfahrzeugs (3) für einen Straßenfertiger, wobei die Straßenbaumaschine (1) ein Chassis (4) aufweist, auf dem ein Führerstand (5) mit einem Fahrzeugdach (6) vorgesehen ist, **dadurch gekennzeichnet, dass** ein oder mehrere Gepäcknetze (8) an dem Fahrzeugdach (6) angebracht sind.

2. Straßenbaumaschine nach Anspruch 1, **dadurch gekennzeichnet, dass** das Fahrzeugdach (6) eine oder mehrere Markisen (7) aufweist, und ein oder mehrere Gepäcknetze (8) an einer der Markisen (7) des Fahrzeugdachs (6) angebracht sind.

3. Straßenbaumaschine nach Anspruch 1 oder 2, **dadurch gekennzeichnet, dass** mindestens ein Gepäcknetz (8) ein elastisches Bauteil ist.

4. Straßenbaumaschine nach Anspruch 1 oder 2, **dadurch gekennzeichnet, dass** mindestens ein Gepäcknetz (8) ein unelastisches Bauteil ist.

5. Straßenbaumaschine nach Anspruch 1 oder 2, **dadurch gekennzeichnet, dass** mindestens ein Gepäcknetz (8) ein teilelastisches Bauteil ist, das nur in eine Richtung dehnbar ist.

6. Straßenbaumaschine nach einem der vorangehenden Ansprüche, **dadurch gekennzeichnet, dass** Maschen mindestens eines Gepäcknetzes (8) eine Abmessung von 0,5 mm bis 50 mm aufweisen.

7. Straßenbaumaschine nach einem der vorangehenden Ansprüche, **dadurch gekennzeichnet, dass** mindestens ein Gepäcknetz (8) an dem Fahrzeugdach (6) und/oder an einer der Markisen (7) des Fahrzeugdachs (6) ortsfest angebracht ist.

8. Straßenbaumaschine nach einem der vorangehenden Ansprüche **dadurch gekennzeichnet, dass** mindestens ein Gepäcknetz (8) an dem Fahrzeugdach (6) und/oder an einer der Markisen (7) des Fahrzeugdachs (6) werkzeuglos lösbar angebracht ist.

9. Straßenbaumaschine nach einem der vorangehenden Ansprüche, **dadurch gekennzeichnet, dass** mindestens ein Gepäcknetz (8) an dem Fahrzeugdach (6) und/oder an einer der Markisen (7) des Fahrzeugdachs (6) mittels zwei seitlicher Verbindungskonsolen (9) angebracht ist.

10. Straßenbaumaschine nach Anspruch 9, **dadurch gekennzeichnet, dass** die Verbindungskonsole (9) Kunststoff aufweist.

11. Straßenbaumaschine nach einem der Ansprüche 1 bis 8, **dadurch gekennzeichnet, dass** mindestens ein Gepäcknetz (8) an dem Fahrzeugdach (6) und/oder an einer der Markisen (7) des Fahrzeugdachs (6) mittels einer Führungsschiene (10), vorzugsweise verschiebbar, angebracht ist.

12. Straßenbaumaschine nach einem der Ansprüche 1 bis 8, **dadurch gekennzeichnet, dass** mindestens ein Gepäcknetz (8) einen an dem Gepäcknetz (8) angeordneten Keder (11) aufweist, wobei der Keder (11) am Fahrzeugdach (6) oder an in die Markisen (7) des Fahrzeugdachs (6) eingearbeiteten Kederschienen (12) angebracht ist.
